# EUROPÄISCHE PATENTSCHRIFT

(11) **EP 0 742 039 B1**
(45) Veröffentlichungstag und Bekanntmachung des Hinweises auf die Patenterteilung: **20.01.1999**
(21) Anmeldenummer: 95106932.7
(22) Anmeldetag: 08.05.1995
(51) Int. Cl.: B01D 47/14, B01D 53/18

(54) **Vorrichtung zur Reinigung von Gasen, wie Abgasen und/oder Synthesegasen**
Device for cleaning gases like exhaust gases and/or synthesis gases
Dispositif de purification de gaz comme des gaz d'échappement et/ou des gaz de syntèse

(43) Veröffentlichungstag der Anmeldung: 13.11.1996
(73) Patentinhaber: THERMOSELECT AKTIENGESELLSCHAFT, FL-9490 Vaduz (LI)
(72) Erfinder: Kiss, Günter H., CH-6648 Minusio (CH)
(74) Vertreter: Pfenning, Meinig & Partner

(56) Entgegenhaltungen:
- EP-A- 0 249 400
- WO-A-88/09204
- CA-A- 1 311 188
- PATENT ABSTRACTS OF JAPAN vol. 5 no. 195 (C-83) [867] ,11.Dezember 1981 & JP-A-56 118713 (TOKYO SHIBAURA DENKI K.K.) 17.September 1981,

## Beschreibung

Die Erfindung betrifft eine Vorrichtung zur Reinigung von Gasen, wie Abgasen und/oder Synthesegasen nach dem Oberbegriff des Anspruchs 1.

Zur Reinigung von kontaminierten Industriegasen aller Art, aber auch zur Qualitätsverbesserung von Nutzgasen, wird in mehreren aufeinanderfolgenden Wäschern mit unterschiedlichen Zielsetzungen gereinigt, wobei Temperatur und pH-Wert der Waschflüssigkeiten stark wechseln können. Die Wäscher haben die Aufgabe, Schadstoffe, wie beispielsweise C0₂, C0, NOx aber auch feste Verunreinigungen, wie Stäube aller Art, aus dem Gasstrom auszutragen.

Die herkömmlichen Gaswäscher sind so aufgebaut, daß jede der einzelnen voneinander getrennt angeordneten Waschstufen, die durch Rohrleitungen miteinander verbunden sind, eine jeweils spezifisch wirkende Lösung enthält, die in aller Regel nur einen bestimmten Schadstoff physikalisch und/oder chemisch bindet, gegebenenfalls absorbiert oder adsorbiert. Den Waschstufen zugeordnete Stofftauscher, sogenannten Kolonnen-Rieselanlagen, sorgen dafür, daß die betreffende Waschflüssigkeit weitgehend im Kreislauf geführt werden kann und daß der Gas-/Flüssigkeitskontakt möglichst großflächig erfolgt. Eine vollständige Waschstufe kennzeichnet sich in einer Batterie- oder Kaskadenanordnung durch einen weitgehend geschlossenen oder abgeschlossenen Behälter ausreichender Druckfestigkeit mit Einlaß- und Auslaßöffnungen, wenigstens einer Revisionsöffnung und einem Sumpf mit Austragsmöglichkeit. Da die Waschflüssigkeiten über Berieselungsanlagen die Gasphase möglichst durchregnen sollen, also die Flüssigphase von oben nach unten fällt, während der zu reinigende Gasstrom von unten nach oben strömt, werden Wäschertürme bevorzugt, d.h. senkrecht stehende zylindrische Behälter, von denen mehrere durch Rohrleitungen verbunden hintereinandergeschaltet sind und so eine vertikale Behälterbatterie bilden. Jeder vertikale Behälter repräsentiert so ein unabhängige Waschstufe. In die Rohrleitungen, mit denen solche Waschstufen miteinander verbunden sind, sind oft Kompensatoren eingefügt, um unterschiedliche Behandlungstemperaturen zwischen den Behältern auffangen zu können, was für Druckventile entsprechend für unterschiedliche Drücke in den Behältern gleichermaßen gilt.

Diese bekannten Kolonnenwaschanlagen haben eine Reihe von Nachteilen, die nicht allein in ihrem erheblichen apparativen Aufwand zu suchen sind, obwohl dieser gerade die Erstellungs- und Betriebskosten außerordentlich hochhält. Jeder der einzelnen Wäscherbehälter ist über mehrere Rohrleitungen, Kompensatoren und dergl. mit einem oder mehreren anderen Waschstufen verbunden, d.h. jeder Wäscherkessel erfordert einen eigenen Montageaufwand mit getrennten Fundamenten, laufender Überwachung der Rohrverbindungen und dergl. mehr. Für jede einzelne Wäscherstufe wird ein kompletter Druckbehälter mit zwei Klöpperböden benötigt, was besonders für Waschprozesse, die bei höheren Drücken ablaufen, mit Zusatzkosten für Material und Einzelfertigung verbunden ist. Die Rohrverbindungen mit ihren Ventilen, Kompensatoren und dergl. wirken als Druckminderer für den Gasfluß durch die Waschanlage, so daß mit einem erheblichen Druckverlust über die Mehrzahl der Waschstufen gearbeitet werden muß. Besonders für Gaswäscher mit nur geringem Druckgefälle im Strömungslauf ergeben sich hierdurch erhebliche Nachteile.

Aus der WO 88/09204 ist eine Anlage für die mehrstufige, nasse Reinigung von Gasen bekannt, welche ein zweischaliges Gehäuse sowie Laufräder zur Zuführung kinetischer Energie für den Abgasstrom aufweist.

Der vorliegenden Erfindung liegt daher die Aufgabe zugrunde, eine Vorrichtung zur Reinigung von Gasen, wie Abgasen und/oder Synthesegasen der eingangs genannten Art dahingehend zu verbessern, daß insbesondere auch bei mehrstufigen Gaswäschern die Konstruktions-, Montage- und Wartungsarbeiten sowie Betriebssicherheit und -Zuverlässigkeit erheblich günstiger vorgebbar sind als das bisher der Fall ist.

Diese Aufgabe wird erfindungsgemäß durch die im Anspruch 1 angegebenen Merkmale erreicht. Vorteilhafte Ausgestaltungen und Weiterbildungen dieser Aufgabenlösung ergeben sich aus den Unteransprüchen.

Dadurch daß alle Waschstufen in einem gemeinsamen horizontal angeordneten Druckbehälter untergebracht sind, ist eine sehr wirtschaftliche module Vorfertigung der gesamten mehrstufigen Wäscheranlage möglich und insbesondere können Einzelnmontagen vor Ort ersatzlos entfallen. Der Fertigungsaufwand für die Gesamtanlage ist bereits deshalb insgesamt erheblich verringert, da nunmehr nur noch zwei Klöpper- bzw. Kesselböden für den einen Druckbehälter benötigt werden. Die vorzugsweise horizontal liegende Bauart des einzigen Druckkessels und seine interne Unterteilung in die einzelnen Waschstufen durch vertikal eingefügte scheibenförmige Standschotten ermöglicht ein problemloses Aneinanderreihen von Einzelwäschern mit unterschiedlichsten Zielsetzungen.

Da die Standschotten Gasdurchlässe mit sehr großem Querschnitt aufweisen, ist der Druckverlust des Gasstromes beim Übergang von einer Wäscherstufe in die nächstfolgende vernachlässigbar klein. Notwendige Stoffaustauscheinheiten können problemlos zwischen den Standschotten angeordnet und an diesen befestigt werden, wobei es sich um herkömmliche bisher für derartige Wäscheranlagen übliche Stoffaustauscher handeln kann. Innerhalb einer oder jeder durch Standschotten begrenzten Waschstufe kann der Gasstrom durch Hängeschotten, die über der Waschflüssigkeit einen größeren Gasdurchlaß freigeben und durch Tauchschotten, die den Gasstrom nach unten abdichten und den Gasdurchtritt nach oben freigeben, auf- und absteigend bzw. im Querschnitt meanderförmig geführt werden. Der Weg der Gasströmung innerhalb einer Waschstufe kann so je nach erforderlicher Verweildauer verlängert werden, wodurch sich auch eine Mehrzahl von Stoffaustauschflächen, in jeder Waschstufe variabel, anbringen läßt.

Heizelemente in der Waschflüssigkeit, Heizregister im Gasstrom, Sprühkühler und andere Temperatureinrichtungen können in und zwischen den einzelnen Waschstufen angeordnet werden und hier trotz oder gerade wegen einheitlicher Modulbauweise variabel in Anordnung und Anzahl sein. Auf diese Weise ist es möglich, die jeweiligen Waschreaktionen unter optimalen Parameterbedingungen, wie Temperatur, Druck und/oder pH-Wert ablaufen zu lassen.

Vorstehend definierte Vorrichtungsanordnung ergibt einen kompakten Kombinationswäscher für den es zusätzlich vorteilhaft ist, wenn seine äußere Dimensionierung etwa der Euronorm für Transportbehälter angepaßt ist, zumindest bezüglich seiner Abmessungen so gewählt wird, daß er den üblichen Anforderungen sowohl über den Transportweg der Schiene als auch der Straße genügt.

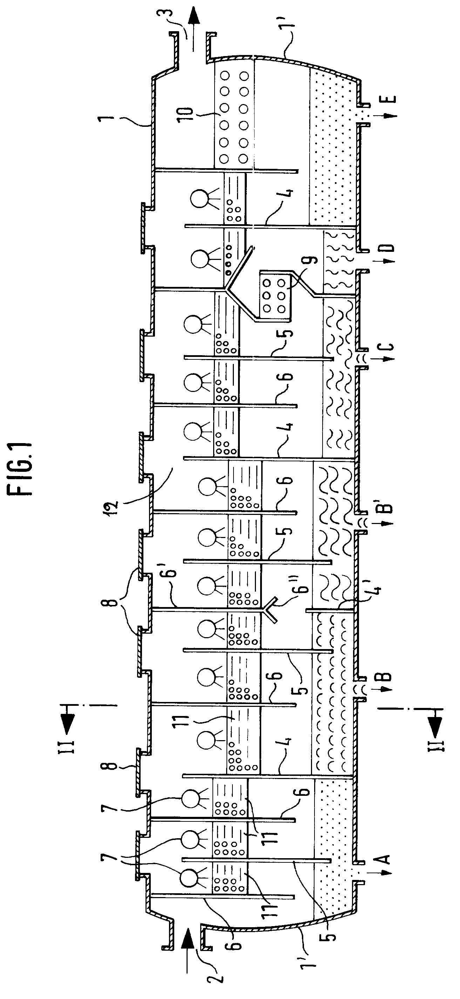

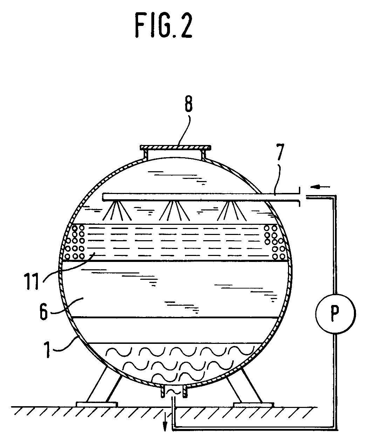

Die Erfindung wird nachfolgend anhand der Fign. 1 und 2 näher erläutert. die eine bevorzugte, jedoch beispielsweise Ausführungsform wiedergeben. Es zeigen:
- Fig. 1: einen schematischen Längsschnitt durch eine erfindungsgemäße Reinigungsvorrichtung, und
- Fig. 2: den Querschnitt der Vorrichtung in der Schnittebene F-F in gleicher Ausführungsform.

Wie aus Fig. 1 ersichtlich, ist ein zylindrischer Mantel 1 eines liegend angeordneten Behälters, der nachfolgend als Kombinationswäscher bezeichnet werden soll, durch Klöpperböden 1' stirnseitig abgeschlossen. Über den Einlaß 2 tritt in den Kombinationswäscher ungewaschenes Gas ein und über den Auslaß 3 das gereinigte Gas aus. Innerhalb des durch die Bauelemente 1 und 3 zusamamengesetzten Kombinationswäschers sind mehrere Waschstufen A bis E angeordnet, die durch einzelne Standschotten 4 voneinander getrennt sind. Weitere Hängeschotten 6 und Tauschschotten 5 sind vorgesehen und ermöglichen es, den Gasstrom innerhalb einer Waschstufe mehfach umzulenken. Die Waschstufen A bis E werden je nach Erfordernis Waschflüssigkeiten unterschiedlicher Beschaffenheit und unterschiedlicher Temperatur aufweisen.

In Fig. 1 soll hier zum Beispiel in den Bädern B und B' jeweils gleiche Waschflüssigkeit vorgesehen sein, wobei jedoch die Badtemperaturen unterschiedlich sind. Die Trennung der beiden Flüssigkeitsbäder zwischen B und B' erfolgt durch das verkürzte Standschott 4' mit dem darüber angeordneten Hängeschott 6', dessen Unterkante einen dachförmigen Abweiser 6'' aufweist. Zwischen den Schotten sind die Stofftauscher 11, von denen in Fig. 1 nur die ersten vier bezeichnet sind, angeordnet, die für sich eine an sich bekannte Bauart aufweisen können. Über Sprührohre 7, von denen nur drei bezeichnet sind, wird die Waschflüssigkeit zu Stofftauscherkolonnen geführt. Der Übersichtlichkeit wegen ist in Fig. 1 nur eine Stofftauschkolonne dargestellt, in der praktischen Anwendung werden mehrere Kolonnen hintereinander mit der entsprechenden Anzahl von Sprühebenen angeordnet, und es wird darauf geachtet, möglichst große Oberflächen der Waschflüssigkeit zu schaffen.

Die einzelnen Waschstufen A bis E sind durch die mit Abdeckungen verschlossenen Revisionsschächte 8 zugänglich.

Eine Gaskühlung ist vorteilhaft mit Hilfe des Tropfenabscheiders 9 möglich. Anstelle des Wärmetauschers kann es auch vorteilhaft sein, eine Sprühkühlung zu verwenden. Ein Heizregister 10 erlaubt es, das zu reinigende Synthesegas wieder zu erwärmen, beispielsweise um den Wirkungsgrad eines nachgeordneten Aktivkohlefilters zu verbessern.

Fig. 2 verdeutlicht gesehen in Richtung des Schnittes F-F von fig. 1 bei gleicher Benennung der Bauelemente die großflächigen Gasdurchlässe der Schotten, die eine optimale Durchströmung des Kombinationswäschers bei minimalisiertem Druckabfall ermöglichen.

Der Bereich des Hängeschottes 6 ist der Deutlichkeit halber in Fig. 2 schraffiert dargestellt. Die Waschflüssigkeit wird, wie schematisch angedeutet, mit Hilfe einer Umwälzpumpe P in Pfeilrichtung im Umlauf gehalten.

Die Zahl der Waschstufen und die Anzahl der Synthesegasumlenkungen innerhalb eine Stufe können ebenso variiert und den Erfordernissen jeweils angepaßt werden, wie die Anzahl der Stofftauscherelemente und der dargestellten Sprühebenen.

## Patentansprüche

1. Vorrichtung zur Reinigung von Gasen, wie Abgasen und/oder Synthesegasen, die aus der Vergasung von Abfällen aller Art, wie Haus- und Gewerbemüll, gewonnen werden, enthaltend ein im wesentlichen horizontal angeordnetes zylindrisches Gehäuse (1, 1'), das durch vertikal scheibenförmige und mit Durchströmungsöffnungen (12) versehene Standschotten (4) in mehrere räumlich aufeinanderfolgende Waschstufen unterteilt ist, welche jeweils Stoffaustauscheinheiten/Kolonnen, einen eigenen Sumpf und eine eigene Revisionsöffnung (8) sowie unterschiedliche Waschflüssigkeiten bei gegebenenfalls unterschiedlichen Temperaturen aufweisen,
dadurch gekennzeichnet,
daß das Gehäuse als einteiliger kompakter Druckbehälter (1, 1') ausgebildet ist, die Durchströmungsöffnungen (12) großflächig ausgestaltet sind und innerhalb jeder Waschstufe (A bis E) mindestens eine über der Waschflüssigkeit einen Gasdurchlaß freigebende Hängeschotte (6) und mindestens eine den Gasdurchlaß nach unten abdichtende und nach oben freigebende Tauchschotte (5) angeordnet ist, welche den Gasstrom meanderförmig umlenken.

2. Vorrichtung nach Anspruch 1,
dadurch gekennzeichnet, daß der gemeinsame Druckbehälter (1, 1') Einrichtungen zum Temperieren (9, 10) der Gase und/oder der Waschflüssigkeiten enthält.

3. Vorrichtung nach Anspruch 1,
dadurch gekennzeichnet, daß der Druckbehälter (1, 1') als vorgenormte Einheit in Abmessungen ausgeführt ist, die einen Transport auf dem Schienenwege und/oder der Straße ermöglichen.

## Claims

1. Equipment for cleaning gases, such as waste gases and/or synthesis gases obtained from the gasification of waste of any type, such as domestic and commercial refuse, comprising an essentially horizontally arranged cylindrical housing (1, 1') which is subdivided by vertically disc-shaped upright bulkheads (4), provided with through-flow ports (12), into a plurality of spatially successive scrubbing stages which each contain mass transfer units/columns, their own still and their own inspection port (8) as well as different scrubbing liquids at temperatures which may differ,
characterized in that the housing is constructed as an integral compact pressure vessel (1, 1'), the through-flow ports (12) are designed to have a large area and, within each scrubbing stage (A to E), at least one suspended bulkhead (6) freeing a gas passage above the scrubbing liquid and at least one submerged bulkhead (5) sealing the gas passage downwards and freeing it upwards are provided, which bulkheads divert the gas stream in a meandering manner.

2. Equipment according to Claim 1, characterized in that the common pressure vessel (1, 1') contains devices (9, 10) for heating or cooling the gases and/or the scrubbing liquids.

3. Equipment according to Claim 1, characterized in that the pressure vessel (1, 1') is constructed as a pre-standardized unit in dimensions which allow transport by rail and/or road.

## Revendications

1. Dispositif de purification de gaz tels que des gaz d'échappement et/ou des gaz de synthèse qui proviennent de la gazéification de déchets de tous types, tels que des ordures ménagères et des déchets industriels, comprenant un carter cylindrique (1, 1') disposé essentiellement à l'horizontale, qui est divisé, par des cloisons de séparation (4) dressées verticalement, en forme de disques et pourvues d'ouvertures de passage (12), en plusieurs étages de lavage spatialement consécutifs qui présentent chacun des colonnes/unités d'échange de matière, un propre réservoir inférieur et une propre ouverture de contrôle (8), ainsi que des liquides de lavage différents éventuellement à des températures différentes,
**caractérisé** en ce que le carter est réalisé sous la forme d'un récipient sous pression (1, 1') compact, d'un seul tenant, les ouvertures de passage (12) sont réalisées de grande surface, et on a disposé, à l'intérieur de chaque étage de lavage (A à E), au moins une cloison de séparation suspendue (6) libérant un passage de gaz au-dessus du liquide de lavage et au moins une cloison de séparation immergée (5) fermant le passage de gaz vers le bas et le libérant vers le haut, ces cloisons déviant le flux de gaz en méandres.

2. Dispositif selon la revendication 1, **caractérisé** en ce que le récipient sous pression commun (1, 1') contient des dispositifs (9, 10) pour équilibrer en température les gaz et/ou les liquides de lavage.

3. Dispositif selon la revendication 1, **caractérisé** en ce que le récipient sous pression (1, 1') est réalisé sous la forme d'une unité de dimensions normalisées, qui permettent un transport routier et/ou ferroviaire.
